Europäisches Patentamt

European Patent Office

Office européen des brevets

(11) Veröffentlichungsnummer: **0 213 282**
**A2**

(12) **EUROPÄISCHE PATENTANMELDUNG**

(21) Anmeldenummer: 86107392.2

(51) Int. Cl.⁴: **B65G 11/16**

(22) Anmeldetag: 30.05.86

(30) Priorität: 27.08.85 DE 3530543

(43) Veröffentlichungstag der Anmeldung:
**11.03.87 Patentblatt 87/11**

(84) Benannte Vertragsstaaten:
**AT BE CH DE FR GB IT LI LU NL SE**

(71) Anmelder: **DIDIER-WERKE AG**
**Lessingstrasse 16-18**
**D-6200 Wiesbaden(DE)**

(72) Erfinder: **Willmann, Gerd, Dr.**
**Fichtenstrasse 24**
**D-6272 Niedernhausen(DE)**

(74) Vertreter: **Brückner, Raimund**
**c/o Didier-Werke AG Lessingstrasse 16-18**
**D-6200 Wiesbaden(DE)**

(54) **Verschleissfestes Auskleidungsbauteil.**

(57) Ein verschleißfestes Auskleidungsbauteil mit einer abriebfesten keramischen Oberfläche soll auch Prallbeanspruchungen von Schüttgütern standhalten. Es ist hierfür an der der Abrieb ausgesetzten Oberfläche 2 gegenüberliegenden Oberfläche 3 einer keramischen Platte 1 ein Unterteil 4, insbesondere aus Polyurethanschaum, angeordnet, das eine Prallbeanspruchung dämpft.

Fig. 1

## Verschleißfestes Auskleidungsbauteil

Die Erfindung betrifft ein verscheißfestes Auskleidungsbauteil mit einer abriebfesten keramischen Oberfläche.

Keramische Auskleidungsbauteile eignen sich zum Schutz von Auskleidungsflächen gegen den Abriebverschleiß beim Transport von körnigen Gütern, wie Erz, Kohle, Koks, Minerale oder Zement. Tritt dabei jedoch eine Prall-oder Schlagbelastung des keramischen Auskleidungsbauteils auf, dann neigt das Bauteil aufgrund seiner Sprödigkeit zu Rißbildung und Bruch.

Prallbeanspruchungen können beispielsweise dann auftreten, wenn die Transportrichtung des transportierten Gutes abgelenkt wird.

Aufgabe der Erfindung ist es, ein Verschleißfestes Auskleidungsbauteil vorzuschlagen, das nicht nur abriebfest ist, sondern auch Prallbeanspruchungen standhält.

Erfindungsgemäß ist obige Aufgabe bei einem Auskleidungsbauteil der eingangs genannten Art dadurch gelöst, daß an der der Abrieb ausgesetzten Oberfläche gegenüberliegenden Oberfläche eines keramischen Oberteils ein Unterteil angeordnet ist, das eine Prallbeanspruchung der dem Abrieb ausgesetzten Oberfläche dämpft. Dadurch ist eine gewisse Elastizität des verschleißfesten Auskleidungsbauteils gegenüber einer Prallbeanspruchung erreicht, ohne daß die Abriebfestigkeit der Oberfläche herabgesetzt ist.

In bevorzugter Ausgestaltung der Erfindung erstreckt sich das Unterteil durchgehend über die der dem Abrieb ausgesetzten Oberfläche gegenüberliegenden Oberfläche. Es ist damit eine gleichmäßige Lagerung des keramischen Oberteils gewährleistet. Es könnten jedoch auch einzelne dämpfende Puffer an der Unterseite des Oberteils vorgesehen sein. Vorzugsweise besteht das Unterteil aus Polyurethan, anderen Kunststoffen, Gummi oder ähnlichem.

Zur Verbindung des Oberteils und des Unterteils ist vorzugsweise der Rand des Oberteils von einem Band umschlossen, welches das Unterteil hält. Günstig ist es dabei, das Band als Stahlband auf das Oberteil aufzuschrumpfen. Dadurch ergeben sich in der vom Abrieb beanspruchten Oberfläche Druckspannungen, die eine Rißbildung unterdrücken. In der DE-PS 33 04 938 ist dies beschrieben.

Weitere vorteilhafte Ausgestaltungen der Erfindung ergeben sich aus den Unteransprüchen und aus der folgenden Beschreibung von Ausführungsbeispielen. In der Zeichnung zeigen:

Fig. 1 einen Teilschnitt eines ersten Ausführungsbeispiels einer Auskleidungsplatte,

Fig. 2 ein weiteres Ausführungsbeispiel der Auskleidungsplatte, und

Fig. 3 ein drittes Ausführungsbeispiel der Auskleidungsplatte.

Bei einer Auskleidungsplatte bildet eine keramische Platte 1 das Oberteil. Die keramische Platte 1 ist beispielsweise auf der Basis von Aluminiumoxid hergestellt. Sie ist dicht und hart und damit auch spröde. Die Oberfläche 2 der Platte 1 ist die Fläche, die beim Einsatz dem Abrieb ausgesetzt ist. Sie ist äußerst abriebfest.

An der der Oberfläche 2 gegenüberliegenden Oberfläche 3 der Platte 1 ist ein Unterteil 4 angeordnet. Das Unterteil 4 besteht aus einer Schicht von Polyurethanmaterial. Die Schicht ist entweder auf die Oberfläche 3 der keramischen Platte 1 aufgeschäumt oder als separate Platte hergestellt.

Das Unterteil 4 erstreckt sich durchgehend die gesamte Oberfläche 3, so daß es die keramische Platte 1 gegenüber einer Auskleidungsfläche 5, auf die das Auskleidungsbauteil aufzulegen ist, durchgehend abstützt.

Um dem um die keramische Platte 1 umlaufenden Rand 6 ist ein Stahlband 7 geschrumpft, das gegenüber der Oberfläche 2 etwas zurücksteht. Das Stahlband 7 überragt die Oberfläche 3 der Platte 1, so daß es den Rand 8 des Unterteils 4 umfaßt. Es reicht jedoch nicht bis an die auf der Auskleidungsfläche 5 aufliegende Auflagerfläche 9 des Unterteils 4, damit es die Dämpfungswirkung des gegenüber der Platte 1 elastischen Unterteils 4 nicht beeinträchtigt.

Wird das Unterteil 4 direkt auf die Oberfläche 3 der keramischen Platte 1 aufgebracht, dann wird vorher das Stahlband 7 um den Rand 6 gesschrumpft. Es dient dann als Teil der für das Befestigen des Unterteils 4 nötigen Form, so daß das Unterteil 4 direkt an das Stahlband 7 befestigt wird. Dadurch ist der Halt des Unterteils 4 an der keramischen Platte 1 wesentlich verbessert. Denn Polyurethan haftet an sich an der keramischen Platte 1 schlecht, wegegen es an dem Stahlband 7 gut haftet.

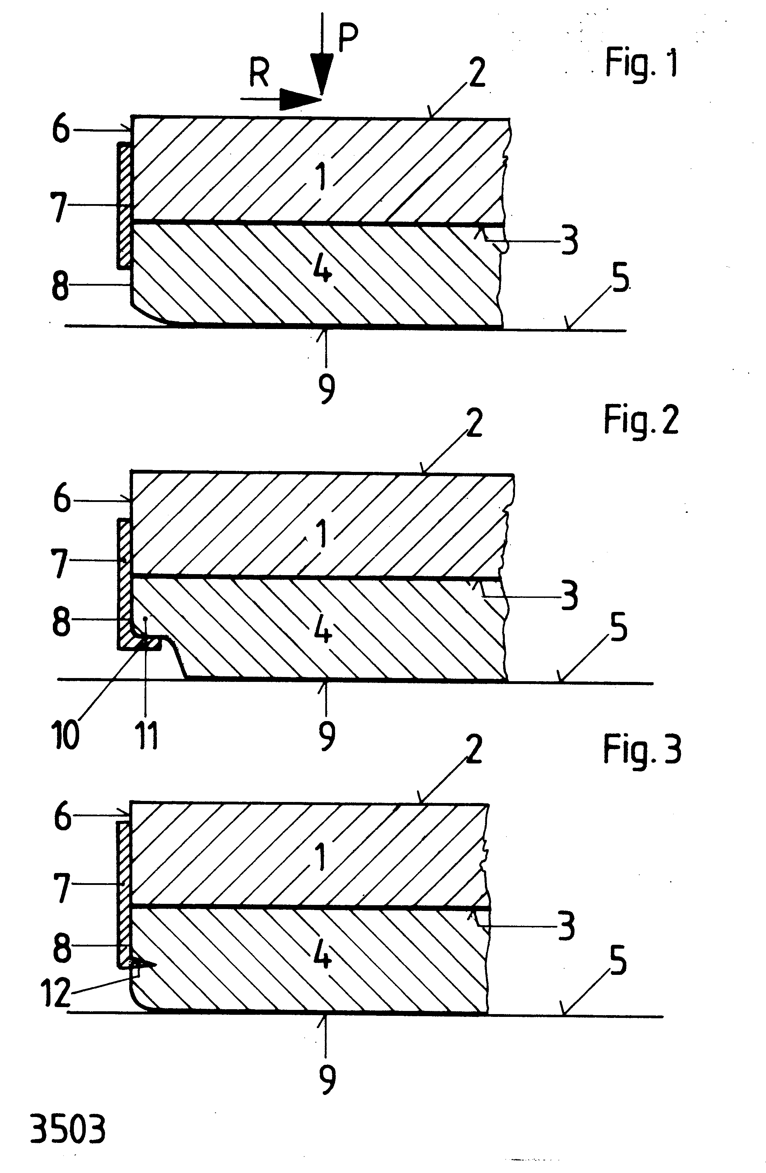

Beim Ausführungsbeispiel nach Fig. 1 ist das Stahlband 7 in seinem am Rand 8 des Unterteils 4 umlaufenden Bereich eben, also nicht zum Untereil 4 hin abgebogen, wogegen es beim Ausführungsbeispiel nach Fig. 2 an seinem unteren Ende eine Abknickung 10 aufweist. Diese übergreift einen Bund 11 des Unterteils 4. Dadurch ist zusätzlich ein formschlüssiger Halt des Unterteils 4 an der keramischen Platte 1 geschaffen.

Beim Ausführungsbeispiel nach Fig. 3 sind am Stahlband 7 beim Unterteil 4 am Umfang mehrere Spitzen 12 ausgebildet, die in das Unterteil 4 greifen. Auch dadurch ist ein formschlüssiger Halt gewährleistet.

Die Funktion des beschriebenen Auskleidungsbauteils ist etwa folgende:

Die Auskleidungsfläche 5 wird mit den beschriebenen Auskleidungsbauteilen ausgelegt.

In Richtung des Pfeiles R über die Oberfläche 2 geförderte Schüttgüter können kaum zu einem Abrieb führen, da die keramische Platte 1 sehr abriebfest ist.

Prallen die Schüttgüter in Richtung des Pfeiles P auf die Oberfläche 2, ist die Gefahr von Rißbildungen gering, da das Unterteil 4 die Platte 1 gegenüber der Auskleidungsfläche 5 dämpft. Außerdem ist die Gefahr von Rißbildungen auch durch die vom Spannband 7 hervorgerufene Oberflächenspannung in der keramischen Platte 1 gemindert.

Anstelle des Stahlbandes 7 kann auch ein Band 7 aus einem anderen Material, beispielsweise auch Kunststoff, um die Platte 1 gelegt werden. Wenn das Band 7 aus Kunststoff besteht, dient es lediglich der Verbindung des Unterteils 4 mit der Platte 1. Das Kunststoffband könnte nach dem Auflegen des Unterteils 4 auf die Oberfläche 3 um die Ränder 6 und 8 gelegt werden. Die Abknickung 10 (vgl. Fig. 2) würde sich dann beim Schrumpfen des Kunststoffbandes von selbst ergeben.

Es können auch mehrere einzelne Befestigungselemente zur Festlegung des Unterteils 4 an der keramischen Platte 1 vorgesehen sein. Das Unterteil 4 könnte auch aus mehreren einzelnen, voneinander beabstandeten Pufferteilen bestehen.

## Ansprüche

1. Verschleißfestes Auskleidungsbauteil mit einer abriebfesten kramischen Oberfläche, dadurch gekennzeichnet, daß an der der Abrieb ausgesetzten Oberfläche (2) gegenüberliegenden Oberfläche (3) eines keramischen Oberteils (1) ein Unterteil (4) angeordnet ist, das eine Prallbeanspruchung der dem Abrieb ausgesetzten Oberfläche (2) dämpft.

2. Auskleidungsbauteil nach Anspruch 1, dadurch gekennzeichnet, daß das Unterteil (4) sich durchgehend über die der dem Abrieb ausgesetzten Oberfläche (2) gegenüberliegende Oberfläche (3) erstreckt.

3. Auskleidungsbauteil nach Anspruch 1 oder 2, dadurch gekennzeichnet, daß das Unterteil (4) von einer vorgefertigten Platte aus einem elastisch dämpfenden Material besteht.

4. Auskleidungsbauteil nach Anspruch 1 oder 2, dadurch gekennzeichnet, daß das Unterteil (4) aus einem Kunststoffschaum an das Oberteil (1) angeschäumt ist.

5. Auskleidungsbauteil nach einem der vorhergehenden Ansprüche, dadurch gekennzeichnet, daß das Unterteil (4) aus Polyurethan besteht.

6. Auskleidungsbauteil nach einem der vorhergehenden Ansprüche, dadurch gekennzeichnet, daß das Unterteil (4) durch an seinem Rand (8) und am Rand (6) des Oberteils (1) angreifende Befestigungselemente am Oberteil (1) gehalten ist.

7. Auskleidungsbauteil nach einem der vorhergehenden Ansprüche, dadurch gekennzeichnet, daß der Rand (6) des Oberteils (1) von einem Band umschlossen ist, welches das Unterteil (4) hält.

8. Auskleidungsbauteil nach Anspruch 7, dadurch gekennzeichnet, daß das Band (7) aufgeschrumpft ist.

9. Auskleidungsbauteil nach Anspruch 8, dadurch gekennzeichnet, daß das Band ein an den Rand (6) des Oberteils (1) aufgeschrumpftes Stahlband (7) ist.

10. Auskleidungsbauteil nach einem der vorhergehenden Ansprüche, dadurch gekennzeichnet, daß die Befestigungselemente bzw. das Band (7) gegenüber der auf der Auskleidungsfläche (5) aufliegenden Auflagefläche (9) des Unterteils (4) zurücksteht.

11. Auskleidungsbauteil nach einem der vorhergehenden Ansprüche, dadurch gekennzeichnet, daß die Befestigungselemente bzw. das Band (7) einen gegenüber der auf der Auskleidungsfläche (5) aufliegenden Auflagerfläche (9) des Unterteils (4) zurückstehenden Bund (11) des Unterteils (4) formschlüssig übergreift.

12. Auskleidungsbauteil nach einem der vorhergehenden Ansprüche, dadurch gekennzeichnet, daß das aus einem Kunststoffmaterial aufgeschäumte Unterteil (4) an dem Band (7) haftet.

Fig. 1

Fig. 2

Fig. 3

3503